Europäisches Patentamt

(19) European Patent Office

Office européen des brevets

(11) Numéro de publication: **0 319 435**
**B1**

(12) **FASCICULE DE BREVET EUROPEEN**

(45) Date de publication du fascicule du brevet: **23.01.91**

(51) Int. Cl.⁵: **A 63 C 5/056**

(21) Numéro de dépôt: **88420397.7**

(22) Date de dépôt: **29.11.88**

(54) **Procédé pour améliorer les propriétés de glissement d'une semelle de ski en polyéthylène haute densité en poudre, et de très haut poids moléculaire.**

(30) Priorité: **04.12.87 FR 8717189**

(43) Date de publication de la demande:
**07.06.89 Bulletin 89/23**

(45) Mention de la délivrance du brevet:
**23.01.91 Bulletin 91/04**

(84) Etats contractants désignés:
**AT CH DE ES FR IT LI SE**

(56) Documents cités:
**DE-A-3 021 022**
**FR-A- 997 619**
**US-A-2 365 326**
**US-A-3 480 997**
**US-A-3 887 319**
**US-A-3 954 372**

(73) Titulaire: **SKIS ROSSIGNOL S.A.**
**F-38500 Voiron (FR)**

(72) Inventeur: **Guiguet, Jacques**
**149 rue du Haut Criel**
**F-38500 Voiron (FR)**

(74) Mandataire: **Laurent, Michel et al**
**Cabinet LAURENT et CHARRAS, 20, rue Louis**
**Chirpaz B.P. 32**
**F-69131 Ecully Cédex (FR)**

Courier Press, Leamington Spa, England.

EP 0 319 435 B1

# Description

L'invention concerne un procédé perfectionné pour améliorer les propriétés de glissement d'une semelle de ski en polyéthylène haute densité en poudre et de très haut poids moléculaire.

Comme on le sait, les semelles de ski actuelles sont réalisées en polyéthylène haute densité (PEHD) obtenu par le procédé dit "basse pression".

On a tout d'abord suggéré de réaliser ces semelles en partant de polymères se présentant sous forme de granulés que l'on extrude sous forme de ruban par un procédé classique, notamment au moyen d'une extrudeuse mono ou bivis, suivie d'une calendreuse à cylindres d'écartement réglable. Il s'agit d'un procédé simple, assez économique, mais qui présente l'inconvénient de conduire à des semelles dont la résistance à l'abrasion est limitée dans le temps.

Pour pallier ces inconvénients, on a suggéré alors d'utiliser du polyéthylène haute densité, non plus sous forme de granulés mais de poudre, c'est-à-dire ayant un très haut poids moléculaire (supérieur à $5.10^5$, de préférence supérieur à $1.10^6$). Malheureusement, ce polymère ne peut pas être extrudé de manière classique dans une extrudeuse de type à vis et à fourreau, car sa viscosité très élevée à l'état fondu nécessite des puissances de moteur importantes et des fourreaux surdimensionnés difficiles à réguler en température. Cela engendre un auto-échauffement du polymère qui alors se dégrade rapidement.

On a alors suggéré de fritter ce polymère notamment par compactage de la poudre dans un moule cylindrique, puis pressage à haute pression pendant un temps appréciable à température élevée. On démoule ensuite la galette ainsi obtenue et on la tranche à la déroulée pour obtenir une feuille de polyéthylène d'épaisseur appropriée que l'on ponce puis que l'on flamme pour la rendre apte au collage. L'épaisseur de la galette correspond à la largeur du ruban à obtenir. On améliore ainsi notablement les propriétés de glisse et de résistance à l'abrasion. Toutefois, ce procédé est long à mettre en oeuvre, nécessite des reprises et conduit donc à des produits coûteux.

L'invention pallie ces inconvénients. Elle vise un procédé pour la fabrication des semelles de ski en polyéthylène haute densité qui fasse appel à un procédé d'extrusion continu, donc qui soit économique, et qui ne dégrade pas les propriétés de la matière, ce qui préserve les qualités des semelles en polyéthylène haute densité et haut poids moléculaire obtenu habituellement par frittage.

Ce procédé pour améliorer les propriétés de glisse d'une semelle de ski en polyéthylène haute densité de poids moléculaire supérieure à $1.10^6$ consiste, en continu:

à partir d'une trémie, à alimenter une chambre avec ledit polyéthylène sous forme de poudre;

à soumettre ladite poudre dans ladite chambre à une compression instantanée sous une pression d'au moins mille bars pour compacter et ramollir par effet de fusion la dite poudre de polyéthylène;

à extruder le polymère ramolli pour le conformer en un ruban,

puis à tirer le ruban par un train d'appel dont la vitesse périphérique est égale à la vitesse d'extrusion,

et enfin, à réceptionner le ruban traité sous forme de bobine.

Ce procédé se caractérise en ce que:

avant l'extrusion, on fait passer le polymère ramolli et fondu successivement dans une enceinte chauffée comportant un mélangeur statique, puis ensuite à travers une grille filtrante;

puis on extrude le polymère ainsi mélangé et filtré au travers d'une filière chauffante à lèvres conformatrices présentant un profil effilé dans le sens de défilement du polymère, et dont la section de sortie correspond à la section désirée du ruban ainsi formé;

puis on refroidit et conforme le ruban obtenu par passage entre deux plateaux refroidis dont l'écartement correspond à celui de la filière et de la section du ruban;

et enfin, on tire et receptionne le ruban refroidi de manière connue.

En d'autres termes, l'invention consiste à avoir sélectionné et agencé selon un ordre précis des opérations certes connues en soi, mais de manière à concourir à un résultat nouveau, à savoir l'obtention d'une semelle de ski en polyéthylène de très haut poids moléculaire par extrusion au lieu du frittage, dont les qualités de glissement sont améliorées.

Avantageusement, en pratique:

l'extrusion de la poudre de polyéthylène haute densité à très haut poids moléculaire s'effectue de manière connue dans une extrudeuse à piston, telle que par exemple une extrudeuse du type de celles décrites dans les documents FR-A-1 538 988 (correspondant au document GB-A-1 158 011), DE-A-1 729 174 (correspondant au document US-A-3 954 372), DE-A-1 778 258 et 2 829-232 (correspondant au document GB-A-2 024 701);

la filière à lèvres conformatrices présente des plaques amovibles dans le sens longitudinal, destinées à permettre un réglage du profil effilé et de l'épaisseur du ruban.

les deux plateaux de l'organe de refroidissement sont constitués chacun par un plateau proprement dit plan sur partie appréciable de leurs faces en regard, refroidi par une circulation d'eau; dans une variante d'exécution, les lèvres conformatrices de la filière peuvent présenter un profil dont la section est en U. Dans ce cas, les deux plateaux de l'organe de refroidis sement sont conformés Pour correspondre au dit profil;

entre le train d'appel et l'organe de refroidissement, on peut intercaler une paire de rouleaux dans l'interstice desquels défile le ruban refroidi, comprenant un premier rouleau dont la périphérie comporte un relief destiné à s'imprimer sur la face au contact du ruban, ce relief présentant un motif approprié pour favoriser l'aptitude au glissement du polyéthylène, et un second rouleau lisse presseur;

avant l'organe de refroidissement, on peut dépose sur une des faces du ruban encore chaud une armature textile de renfort ou un film transférable portant un motif sublimable à chaud;

après le train de tirage mais avant le bobinage, le ruban passe en continu sur un organe de ponçage, puis de dépoussièrage;

après le dépoussièrage le ruban traité passe en continu sur un organe de traitement par plasma, destiné à rendre le polyéthylène apte au collage, et/ou à l'impression sérigraphique, et/ou au laquage;

le traitement par plasma est effectué selon un procédé choisi dans le groupe constitué par le flammage et l'effet Corona.

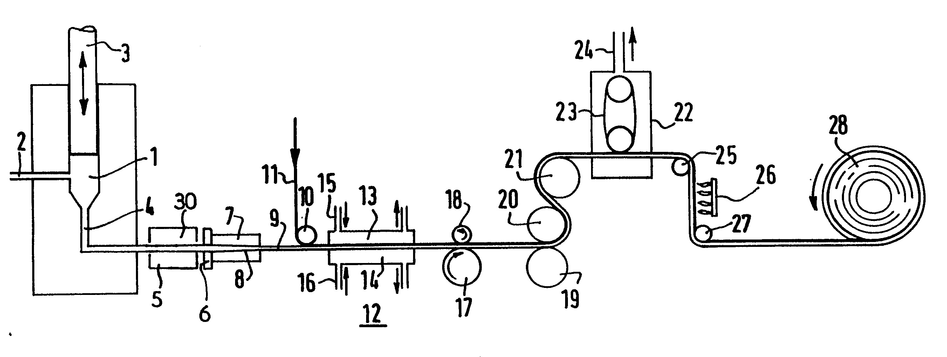

La manière dont l'invention peut être réalisée et les avantages qui en découlent ressortiront mieux de l'exemple de réalisation qui suit, à l'appui de la figure unique annexée qui schématise une installation conforme à l'invention.

Cette installation comporte tout d'abord une extrudeuse dont la chambre (1) est alimentée en poudre de polyéthylène haute densité à très haut poids moléculaire ($1.10^6$ et plus) à partir d'une trémie se déversant dans un canal (2) et dans laquelle agit un piston (3) animé d'un mouvement de va-et-vient à l'instar de ce qui est décrit dans les brevets sus-visés, notamment FR-A-1 538 988 (GB-A-1 158 011), générant de fait une compression instantanée au niveau du polymère. De la sorte, la pression règnant dans l'ensemble du dispositif décrit est au moins égale à mille bars, et peut atteindre, lorsque cela est requis la valeur de dix mille bars. Ce compactage induit un ramollissement, puis la fusion du polymère.

Le polymère fondu s'écoule par le canal (4) d'où il pénètre dans une enceinte chauffée (5) comportant un mélangeur statique (30) d'un type en soi connu du genre en croix ou en hélice. Par "mélangeur statique", on désigne un dispositif permettant simultanément d'homogénéïser et de compacter le dit polymère. De la sorte, on obtient en sortie du mélangeur une fusion uniforme dudit polymère. De plus, ce mélangeur permet d'obtenir une coloration également uniforme, lorsque cela est requis, par homogénéïsation du mélange maître et de la poudre de polymère de base.

Le polymère ainsi mélangé traverse ensuite une grille filtrante (6) fine et résistante, réalisée en acier, voire en acier inoxydable. Dans l'exemple de réalisation décrit, les trous de la grille (6) ont une forme carrée de 0,5 millimètre de coté.

Le polymère pénètre alors dans la filière chauffante (7) dont les lèvres conformatrices (8) sont, en section longitudinale, inclinées vers la sortie de manière à conférer au ruban (9) les dimensions désirées (largeur et épaisseur). Ces lèvres conformatrices (8) sont constituées de plaques amovibles dans le sens longitudinal, l'entre-axe de sortie de ces plaques est règlable et correspond à l'épaisseur désirée du ruban (9). Comme déjà dit, ces lèvres sont interchangeables, chaque jeu de lèvres étant prévu pour une épaisseur et une forme du ruban (9) données. Ainsi, il va de soi qu'une forme en U peut être donnée au ruban à l'issue des dites lèvres conformatrices.

Sur une des faces de ce ruban (9) encore chaud, on peut appliquer par un renvoi (10) au contact du ruban, une armature textile (11) de renfort servant d'intermédiaire de collage, ou encore un film transférable portant un motif sublimable à la chaleur.

L'ensemble pénètre ensuite dans un organe de refroidissement désigné par la référence générale (12) constitué par deux plateaux parallèles (13, 14) en aluminium poli refroidi par une circulation d'eau (15, 16). Il est à noter que l'écartement et la forme des plateaux (13, 14) correspondent à ceux de la filière (7), notamment en sortie des lèvres conformatrices (8). Ainsi, si le ruban présente une forme en U en sortie des lèvres conformatrices (8), les plateaux (13, 14) sont conformés de manière correspondante.

Le ruban refroidi passe ensuite dans un train de rouleaux constitué par un premier rouleau (17) dont la périphérie comporte un relief destiné à s'imprimer sur la face inférieure du ruban selon un motif approprié pour favoriser le glissement du polyéthylène, et un second rouleau (18) lisse presseur destiné à bien appliquer ce relief. Il va de soi que la face du ruban destinée à venir au contact du rouleau à relief (17) n'est pas celle qui aurait reçu l'armature textile de renfort (11).

Le ruban est alors appelé en continu par un train de tirage constitué de manière connue par un jeu de rouleaux (19, 20, 21) parallèles moteurs et maintenus à température ambiante, et dont la vitesse de rotation périphérique la même que celle d'extrusion.

Le ruban tiré passe ensuite dans une station de ponçage (22) où il est soumis à l'action d'une feuille abrasive sans fin (23) dans laquelle les poussières sont aspirées de manière connue en (24). Par un rouleau de détour (25), le ruban poncé défile ensuite devant une station de flammage (26), afin, selon le cas, de rendre apte le polyéthylène au collage, et/ou à l'impression sérigraphique ou encore au laquage. Bien évidemment, lorsque le ruban a reçu une structure textile de renfort sur une des ses faces, les opérations de ponçage (22) et de flammage (26) sur la même face deviennent inutiles.

De manière similaire, le ruban tiré peut subir des décharges Corona en lieu et place du flammage décrit cidessus.

Grâce à un rouleau de détour (27), le ruban terminé est ensuite renvidé sous forme de bobine (28).

Le ruban de polyéthylène haute densité à très haut poids moléculaire préparé conformément à l'invention présente une bonne résistance à l'abrasion et d'excellentes propriétés de glisse. De la sorte, il convient parfaitement pour la fabrication des semelles de ski.

## Revendications

1. Procédé pour améliorer les propriétés de glissement d'une semelle de ski en polyéthylène haute densité de poids moléculaire supérieur à $1.10^6$, consiste, en continu:

à alimenter, à partir d'une trémie, une chambre (1) avec ledit polyéthylène sous forme de poudre;

à soumettre ladite poudre dans ladite chambre (1) à une compression instantanée sous une pression d'au moins mille bars pour compacter et ramollir par effet de fusion la dite poudre de polyéthylène;

à extruder le polymère ramolli pour le conformer en un ruban (9);

puis à tirer le ruban (9) par un train d'appel (19, 20, 21) dont la vitesse périphérique est égale à la vitesse d'extrusion;

et enfin, à réceptionner le ruban traité sous forme de bobine (28);

caractérisé en ce que:

avant l'extrusion, on fait passer le polymère ramolli et fondu successivement dans une enceinte chauffée (5) comportant un mélangeur statique (30), puis ensuite à travers une grille filtrante (6);

puis on extrude le polymère ainsi mélangé et filtré au travers d'une filière chauffante (7) à lèvres conformatrices (8) présentant un profil effilé dans le sens de défilement du polymère et dont la section de sortie correspond à la section désirée du ruban (9) ainsi formé;

puis on refroidit et conforme le ruban obtenu (9) par passage entre deux plateaux refroidis (13, 14) dont l'écartement correspond à celui de la filière (7) et de la section du ruban (9);

et enfin on tire le ruban refroidi de manière connue.

2. Procédé selon la revendication 1, caractérisé en ce que l'extrusion de la poudre de polyéthylène haute densité à très haut poids moléculaire s'effectue dans une extrudeuse à piston (3) animé d'un mouvement de va-et-vient.

3. Procédé selon l'une des revendications 1 et 2, caractérisé en ce que la filière (7) à lèvres conformatrices (8) présente des plaques amovibles dans le sens longitudinal, destinées à permettre un réglage du profil effilé et de l'épaisseur du ruban (9).

4. Procédé selon l'une des revendications 1 à 3, caractérisé en ce que les deux plateaux (13, 14) de l'organe de refroidissement sont constitués chacun par un plateau proprement dit plan sur partie appréciable de leurs faces en regard, refroidi par une circulation d'eau.

5. Procédé selon l'une des revendications 1 à 4, caractérisé en ce que entre le train d'appel (19, 20, 21) et l'organe de refroidissement (13, 14), on intercale une paire de rouleaux (17, 18) dans l'interstice desquels défile le ruban refroidi (9), comprenant un premier rouleau (17) dont la périphérie comporte un relief destiné à s'imprimer sur la face au contact du ruban (9), ce relief présentant un motif approprié pour favoriser l'aptitude au glissement du polyéthylène, et un second rouleau (18) lisse presseur.

6. Procédé selon l'une des revendications 1 à 5, caractérisé en ce que avant l'organe de refroidissement (13, 14), on dépose sur une des faces du ruban (9) encore chaud une armature textile de renfort ou un film transférable portant un motif sublimable à chaud.

7. Procédé selon l'une des revendications 1 à 6, caractérisé en ce que après le train de tirage (19, 20, 21) mais avant le bobinage, le ruban (9) passe en continu sur un organe de ponçage (22, 23), puis de dépoussièrage (24).

8. Procédé selon la revendications 7, caractérisé en ce que après le dépoussièrage (24), le ruban traité (9) passe en continu sur un organe de traitement par plasma (26), destiné à rendre le polyéthylène apte au collage, et/ou à l'impression sérigraphique, et/ou au laquage.

9. Procédé selon la revendication 8, caractérisé en ce que le traitement par plasma (26) est effectué selon un procédé choisi dans le groupe constitué par le flammage et l'effet Corona.

## Patentansprüche

1. Verfahren zur Verbesserung der Gleiteigenschaften einer Skisohle aus Polyethylen von hoher Dichte mit einem Molekulargewicht größer als $1.10^6$, bestehend aus der Folge der Schritte:

Beschicken einer Kammer (1) mit dem Polyethylen in Form von Pulver, mittels eines Trichters;

Unterwerfen des Pulvers in der Kammer (1) einer kurzzeitigen Kompression unter einem Druck von wenigstens 1 000 bar zum Verdichten und Erweichen, um die Fusion des Polyethylenpulvers zu bewirken;

Strangpressen des erweichten Polymers, um es zu einem Band (9) zu formen;

dann Ziehen des Bandes (9) mit einer Abnahmeeinrichtung (19, 20, 21), deren Umfangsgeschwindigkeit gleich der Geschwindigkeit des Strangpressens ist;

und dann Aufnehmen des bearbeiteten Bandes in Form einer Rolle (28);

dadurch gekennzeichnet, daß:

man vor dem Strangpressen das erweichte und geschmolzene Polymer nach und nach durch eine Heizkammer (5), die ein statisches Rührwerk (30) aufweist. und unmittelbar danach quer durch ein Filtriergitter (6) durchtreten läßt;

man dann das so gemischte und filtrierte Polymer quer durch eine heizende Düse (6) mit formgebenden Lippen (8) strangpreßt, die ein in Bewegungsrichtung des Polymers verjüngtes Profil aufweist und deren Austrittsquerschnitt dem gewünschten Querschnitt des so gebildeten Bandes (9) entspricht;

man dann das erhaltene Band (9) abkühlt und mittels Durchgang zwischen zwei Kühlplatten (13, 14) ausformt, deren lichte Weite der der Düse (7) und dem Querschnitt des Bandes (9) entspricht;

und man schließlich das abgekühlte Band in bekannter Weise herauszieht.

2. Verfahren nach Anspruch 1, dadurch gekennzeichnet, daß das Strangpressen des Pulvers von Polyethylen mit hoher Dichte und sehr hohem

Molekulargewicht in einer Strangpresse mit einem Kolben (3) bewirkt wird, der eine hin- und hergehende Bewegung ausführt.

3. Verfahren nach einem der Ansprüche 1 oder 2, dadurch gekennzeichnet, daß die Düse (7) mit den formgebenden Lippen (8) in Längsrichtung bewegliche Platten aufweist, die dazu vorgesehen sind, eine Einstellung des verjüngten Profiles und der Stärke des Bandes (9) zu erlauben.

4. Verfahren nach einem der Ansprüche 1 bis 3, dadurch gekennzeichnet, daß jede der beiden Platten (13, 14) des Abkühlorgans von einer eigentlich über einen merklichen Bereich ihrer jeweils der anderen Platte gegenüberliegenden Fläche ebenen Platte gebildet ist, die über einen Wasserkreislauf gekühlt wird.

5. Verfahren nach einem der Ansprüche 1 bis 4, dadurch gekennzeichnet, daß zwischen der Abnahmeeinrichtung (19, 20, 21) und dem Abkühlorgan (13, 14) ein Paar Walzen (17, 18) eingeschaltet ist, durch deren Spalt das abgekühlte Band (9) hindurchtritt, das eine erste Walze (17) aufweist, deren Umfangsfläche ein Relief trägt, das dazu vorgesehen ist, sich in die damit in Kontakt befindliche Seite des Bandes (9) einzudrücken, wobei dieses Relief ein geeignetes Muster aufweist, um die Gleiteigenschaft des Polyethylens zu fördern, und das eine zweite glatte Andruckwalze (18) aufweisen.

6. Verfahren nach einem der Ansprüche 1 bis 5, dadurch gekennzeichnet, daß vor dem Abkühlorgan (13, 14) auf eine Seite des noch heißen Bandes (9) eine zusätzliche textile Bewehrung oder eine übertragbare Schicht aufgebracht wird, die ein unter Hitze sublimierbares Muster aufweist.

7. Verfahren nach einem der Ansprüche 1 bis 6, dadurch gekennzeichnet, daß nach der Ziehstrecke (19, 20, 21), aber vor dem Aufwickeln das Band (9) in der Folge ein Schleiforgan (22, 23) und dann eine Entstaubung (24) durchläuft.

8. Verfahren nach Anspruch 7, dadurch gekennzeichnet, daß nach der Entstaubung (24) das bearbeitete Band (9) in der Folge ein Organ zur Plasmabehandlung (26) durchläuft, das dazu vorgesehen ist, das Polyethylen zum Verkleben und/oder zum Siebbedrucken und/oder zum Lackieren geeignet zu machen.

9. Verfahren nach Anspruch 8, dadurch gekennzeichnet, daß die Plasmabehandlung (26) gemäß einem Verfahren bewirkt wird, das aus der Gruppe bestehend aus dem Abflammen und der Koronaentladung ausgewählt ist.

## Claims

1. A process for improving the sliding properties of a ski sole from high density polyethylene having a molecular weight above $1.10^6$, which consists in continuously:

feeding the said polyethylene powder material from a hopper to a chamber (1);

subjecting said powder into the said chamber (1) to an instantaneous compression under a pressure of at least one thousand bars for compacting and softening said polyethylene powder by means of a fusion effect;

extruding the melted polymer for conforming into a tape (9);

then drawing the tape (9) by using a pull train (19, 20, 21) whose peripheral speed is equal to the speed of extrusion;

and finally, receiving the treated tape in the form of a reel (28);

characterized in that:

before extruding, the softened and melted polymer successively pass into a heated enclosure (5) comprising a static mixer (30), then through a filter guide (6);

then extruding the polymer thus mixed and filtered through a heated die (7) with shaping lips (8) with a profile tapered in the direction of travel of the polymer and whose exit cross-section corresponds to the desired cross-section of the tape (9) thus formed;

then cooling and shaping the tape obtained (9) by passing between two cooled plates (13, 14) whose clearance corresponds to the cross-section of the die (7) and of the tape (9);

and finally, drawing the cooled tape in a known manner.

2. Process according to claim 1, wherein the extrusion of the high density polyethylene powder of very high molecular weight is carried out in reciprocating raw extruder (3).

3. Process according to any claims 1 and 2, wherein the die (7) with shaping lips (8) has plates which are removable in the lengthwise direction, intended to allow an adjustment of the tapered profile and of the thickness of the tape (9).

4. Process according to any claims 1 to 3, wherein the two plates (13, 14) of the cooling units comprise a plate which is actually planar over an appreciable portion of each opposed face, cooled by water circulation.

5. Process according to any claims 1 to 4, wherein between the pull train (19, 20, 21) and the cooling unit (13, 14), a pair of rolls (17, 18) is inserted in the gap between which the cooled tape (9) travels, comprising a first roll (17) whose periphery comprises a relief pattern intended to be printed onto the contact face of the tape (9), this relief having an appropriate pattern, for promoting the slipping ability of the polyethylene, and a second smooth press roll (18).

6. Process according to any claims 1 to 5, wherein, before the cooling unit (13, 14), applying a textile strengthening reinforcement or a transferable film carrying a pattern sublimable when hot, on one face of the tape (9) when is still hot.

7. Process according to any claims 1 to 6, wherein, after the pull train (19, 20, 21), but before the reeling, the tape (9) passes continuously over a rubbing-down unit (22, 23) followed by a dust removal unit (24).

8. Process according to claim 7, wherein, after the dust removal (24), the treated tape (9) passes continuously over a plasma treatment unit (26), intended to make the polyethylene receptive to adhesive bonding, and/or to lacquering, and/or to

silk-screen printing.

9. Process according to claim 1, wherein the plasma treatment (26) is performed by a process chosen within the group consisting of flaming and the corona effect.